# EUROPEAN PATENT APPLICATION

(11) **EP 4 764 842 A1**
(43) Date of publication of application: **24.06.2026**
(21) Application number: 24861609.6
(22) Date of filing: 21.06.2024
(51) Int. Cl.: G06F 9/30

(54) **METHOD AND APPARATUS FOR STENCIL COMPUTATION, AND COMPUTATION DEVICE**

(30) Priority: 07.09.2023 CN 202311161061
(71) Applicant: HUAWEI TECHNOLOGIES CO., LTD., Shenzhen 518129 (CN)
(72) Inventor: ZOU, Jingyuan, Shenzhen, Guangdong 518129 (CN); YU, Fan, Shenzhen, Guangdong 518129 (CN); FENG, Ben, Shenzhen, Guangdong 518129 (CN)
(74) Representative: Maiwald GmbH
(86) International application number: PCT/CN2024/100798
(87) International publication number: WO 2025/050763

(57) **Abstract**

Embodiments of this application pertain to the field of computing technologies, and in particular, to a method and an apparatus for performing stencil computation, and a compute device. The method includes: obtaining a plurality of pieces of node data included in a computation area, and forming a data vector by using the plurality of pieces of node data; performing determining processing on the plurality of pieces of node data based on at least one computation condition included in the stencil computation, to obtain a determining result that is of each piece of node data and that corresponds to each computation condition; forming, for each computation condition, a determining result vector by using determining results that are of the plurality of pieces of node data and that correspond to the computation condition, to obtain the determining result vector; and performing, based on the data vector and the determining result vector corresponding to each computation condition, a computation operation corresponding to each computation condition in the stencil computation, to obtain a computation result of the stencil computation. In this application, stencil computation can be converted into vector computation, so that efficiency of the stencil computation can be improved.

## Description

This application claims priority to Chinese Patent Application No. 202311161061.1, filed on September 7, 2023 and entitled "METHOD AND APPARATUS FOR STENCIL COMPUTATION, AND COMPUTE DEVICE", which is incorporated herein by reference in its entirety.

### TECHNICAL FIELD

This application relates to the field of computing technologies, and in particular, to a method and an apparatus for stencil computation, and a compute device.

### BACKGROUND

Stencil (stencil) computation is a common loop computation method, and is characterized by traversing node data in a computation area and performing similar computation processing on node data traversed each time.

In the stencil computation, computation performed on the node data traversed each time is generally scalar computation. Therefore, scalar computation of node data traversed a plurality of times may be converted into vector computation. In this way, batch node data computation can be implemented through vector computation, improving efficiency of the stencil computation.

However, in the stencil computation, node data may be determined based on a computation condition. Corresponding to different determining results, different computation need to be performed on the node data. For example, when the node data is an odd number, 1 may be added to the node data; or when the node data is an even number, 2 may be added to the node data. Therefore, determining processing needs to be sequentially performed on the traversed node data, and then corresponding computation is performed based on the determining results. The stencil computation cannot be converted into the vector computation, resulting in low efficiency of performing stencil computation.

### SUMMARY

Embodiments of this application provide a method and an apparatus for stencil computation, and a compute device, to improve efficiency of stencil computation. Corresponding technical solutions are as follows:

According to a first aspect, a method for performing stencil computation is provided, where the stencil computation includes at least one computation condition and a corresponding computation operation, and the method for performing stencil computation includes:
obtaining, by a processor, a plurality of pieces of node data included in a computation area, and forming a data vector by using the plurality of pieces of node data; performing determining processing on the plurality of pieces of node data based on the at least one computation condition included in the stencil computation, to obtain a determining result that is of each piece of node data and that corresponds to each computation condition; forming, for each computation condition, a determining result vector by using determining results that are of the plurality of pieces of node data and that correspond to the computation condition, to obtain the determining result vector corresponding to the computation condition; and performing, based on the data vector and the determining result vector corresponding to each computation condition, a computation operation corresponding to each computation condition in the stencil computation, to obtain a computation result of the stencil computation.

In the solution shown in this application, determining processing is performed on each piece of node data by using each computation condition in advance, to obtain the determining result vector corresponding to each computation condition, and then vector computation is performed on the determining result vector corresponding to each computation condition and the data vector formed by using the plurality of pieces of node data, so that the computation operation corresponding to the computation condition that each piece of node data meets is performed on the node data. It can be learned that, in the solution shown in this application, stencil computation including the computation condition can be converted into vector computation, improving efficiency of performing stencil computation.

In an implementation, the computation area is a structured grid or an unstructured grid. In this way, in the solution shown in this application, computational efficiency of stencil computation in the structured grid or the unstructured grid can be further improved.

In an implementation, the computation area is the unstructured grid, and the corresponding processing of forming the data vector by using the plurality of pieces of node data includes: applying for memory storage space in a memory for the plurality of pieces of node data; mapping the plurality of pieces of node data from original storage space to the memory storage space in a traversal sequence of the plurality of pieces of node data in the computation area; and reading the plurality of pieces of node data from the memory storage space according to a vector read instruction, to obtain the data vector.

In the solution shown in this application, for the unstructured grid, mapping may be performed from the original storage space (for example, a hard disk drive) to the memory storage space in the traversal sequence of the node data. In this way, when stencil computation is performed on the unstructured grid, node data continuously read from the memory storage space is the node data traversed in the traversal sequence. In this way, discontinuous read does not need to be performed on the node data in the original storage space in the traversal sequence each time, and further, stencil computation of an unstructured grid can be converted into vector computation, so that efficiency of the stencil computation of the unstructured grid can be improved.

In an implementation, the forming, for each computation condition, the determining result vector by using the determining results that are of the plurality of pieces of node data and that correspond to the computation condition, to obtain the determining result vector corresponding to the computation condition includes: forming, for each computation condition, the determining result vector by using the determining results that are of the plurality of pieces of node data and that correspond to the computation condition in the traversal sequence of the plurality of pieces of node data in the computation area, to obtain the determining result vector corresponding to the computation condition. In this way, the determining result vector may be formed by using the determining results that are of the node data and that correspond to each computation condition in the traversal sequence of the node data. Vector computation may then be performed on the formed determining result vector and the data vector, to convert the stencil computation into the vector computation, so that efficiency of the stencil computation can be improved.

In an implementation, the performing determining processing on the plurality of pieces of node data based on the at least one computation condition included in the stencil computation, to obtain the determining result that is of each piece of node data and that corresponds to each computation condition includes: performing determining processing on the plurality of pieces of node data based on the at least one computation condition included in the stencil computation; and for each piece of node data, if the node data does not meet the computation condition, determining that the determining result corresponding to the node data is a first value; or if the node data meets the computation condition, determining that the determining result corresponding to the node data is a second value. In an example, the first value is 0, and the second value is 1.

In the solution shown in this application, for node data that does not meet the computation condition, a corresponding determining result may be set to the first value, and for node data that meets the computation condition, a corresponding determining result may be set to the second value. In this way, the first value and the second value are set in the determining result vector corresponding to the computation condition, so that a corresponding computation operation can be performed on node data that meets the computation condition in the data vector, thereby implementing stencil computation through vector computation, and improving efficiency of the stencil computation.

In an implementation, the performing, based on the data vector and the determining result vector corresponding to each computation condition, the computation operation corresponding to each computation condition in the stencil computation, to obtain the computation result of the stencil computation includes: sequentially performing, for each computation condition and according to a vector computation instruction, vector computation of the determining result vector and an input vector that correspond to each computation condition, to obtain a computation result vector corresponding to each computation condition, where an input vector corresponding to a 1^{st} computation condition is the data vector, and an input vector corresponding to a computation condition after the 1^{st} computation condition is a computation result vector corresponding to a previous computation condition; and in the computation result vector corresponding to each computation condition, an updated element exists relative to a corresponding input vector, and is a computation result of performing a corresponding computation operation on node data that meets the computation condition in the input vector, and a computation result vector corresponding to a last computation condition is the computation result of the stencil computation.

In the solution shown in this application, vector computation may be performed on the data vector used as an initial input vector and the determining result vector corresponding to the computation condition. The obtained computation result vector may be used as an input vector for performing vector computation with a determining result vector corresponding to a next computation condition. In this way, after vector computation is performed on the determining result vector corresponding to each computation condition, the computation result of stencil computation may be obtained. In this way, the stencil computation is converted into the vector computation, so that efficiency of the stencil computation can be improved.

According to a second aspect, an apparatus for performing stencil computation is provided, where the stencil computation includes at least one computation condition and a corresponding computation operation, and the apparatus includes:
an obtaining module, configured to: obtain a plurality of pieces of node data included in a computation area, and form a data vector by using the plurality of pieces of node data;
a determining module, configured to perform determining processing on the plurality of pieces of node data based on the at least one computation condition included in the stencil computation, to obtain a determining result that is of each piece of node data and that corresponds to each computation condition;
a generation module, configured to: form, for each computation condition, a determining result vector by using determining results that are of the plurality of pieces of node data and that correspond to the computation condition, to obtain the determining result vector corresponding to the computation condition; and
a computation module, configured to perform, based on the data vector and the determining result vector corresponding to each computation condition, a computation operation corresponding to each computation condition in the stencil computation, to obtain a computation result of the stencil computation.

In an implementation, the computation area is a structured grid or an unstructured grid.

In an implementation, the computation area is the unstructured grid, and the obtaining module is configured to: apply for memory storage space in a memory for the plurality of pieces of node data; map the plurality of pieces of node data from original storage space to the memory storage space in a traversal sequence of the plurality of pieces of node data in the computation area; and read the plurality of pieces of node data from the memory storage space according to a vector read instruction, to obtain the data vector.

In an implementation, the generation module is configured to: form, for each computation condition, the determining result vector by using the determining results that are of the plurality of pieces of node data and that correspond to the computation condition in the traversal sequence of the plurality of pieces of node data in the computation area, to obtain the determining result vector corresponding to the computation condition.

In an implementation, the determining module is configured to: perform determining processing on the plurality of pieces of node data based on the at least one computation condition included in the stencil computation; and for each piece of node data, if the node data does not meet the computation condition, determine that the determining result corresponding to the node data is a first value; or if the node data meets the computation condition, determine that the determining result corresponding to the node data is a second value.

In an implementation, the computation module is configured to: sequentially perform, for each computation condition and according to a vector computation instruction, vector computation of the determining result vector and an input vector that correspond to each computation condition, to obtain a computation result vector corresponding to each computation condition, where an input vector corresponding to a 1^{st} computation condition is the data vector, and an input vector corresponding to a computation condition after the 1^{st} computation condition is a computation result vector corresponding to a previous computation condition; and in the computation result vector corresponding to each computation condition, an updated element exists relative to a corresponding input vector, and is a computation result of performing a corresponding computation operation on node data that meets the computation condition in the input vector, and a computation result vector corresponding to a last computation condition is the computation result of the stencil computation.

In an implementation, the first value is 0, and the second value is 1.

According to a third aspect, a compute device is provided. The compute device includes a storage and a processor. The storage stores at least one instruction, and the processor executes the at least one instruction to perform the method according to any one of the first aspect and/or the implementations of the first aspect.

According to a fourth aspect, a computer-readable storage medium is provided. The computer-readable storage medium stores computer program code. When the computer program code is executed by a computer device, the computer device is enabled to perform the method according to any one of the first aspect and/or the implementations of the first aspect.

According to a fifth aspect, a computer program product including instructions is provided. When the computer program product runs on a computer device, the computer device is enabled to perform the method according to any one of the first aspect and/or the implementations of the first aspect.

### BRIEF DESCRIPTION OF DRAWINGS

FIG. 1 is a diagram of a structure of a structured grid according to an embodiment of this application;
FIG. 2 is a diagram of a structure of an unstructured grid according to an embodiment of this application;
FIG. 3 is a diagram of a structure of a compute device according to an embodiment of this application;
FIG. 4 is a flowchart of a method for performing stencil computation according to an embodiment of this application;
FIG. 5 is a flowchart of a method for performing stencil computation according to an embodiment of this application;
FIG. 6 is a diagram of a method for performing stencil computation according to an embodiment of this application; and
FIG. 7 is a diagram of a structure of an apparatus for performing stencil computation according to an embodiment of this application.

### DESCRIPTION OF EMBODIMENTS

To make objectives, technical solutions, and advantages of this application clearer, the following further describes implementations of this application in detail with reference to the accompanying drawings.

Stencil computation is a common computing mode in high performance computing (High Performance Computing, HPC), and is widely applied to various fields, such as image processing and differential equation solving. Stencil computation is characterized by traversing node data in a computation area and performing similar computation processing on node data traversed each time.

A grid is a network structure including a plurality of interconnected grid nodes, commonly used to describe geometric shapes, topology structures, and related physical and mathematical problems, and is a computational object frequently encountered in fields such as computer graphics, computational fluid dynamics, and finite element method.

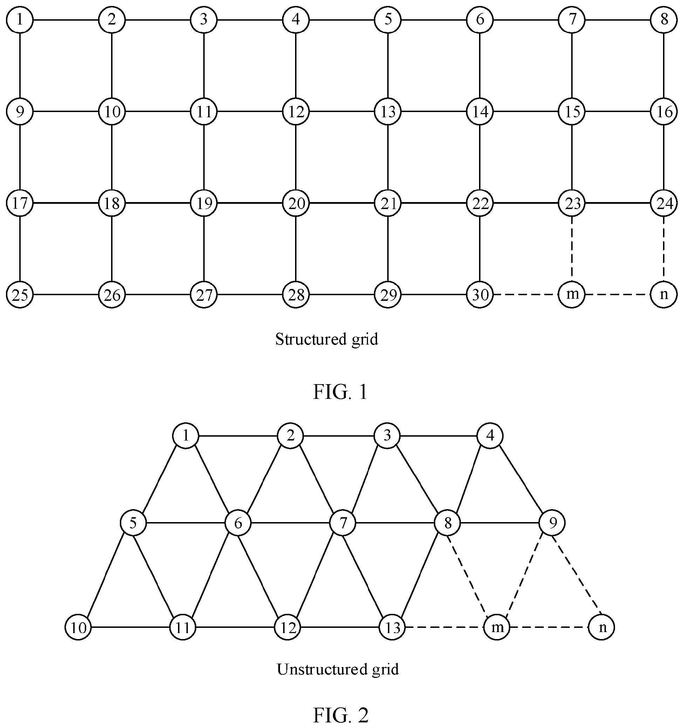

Grids can be structurally classified into a structured grid and an unstructured grid. As shown in FIG. 1, the structured grid generally refers to a grid whose structure is a quadrilateral and a hexahedron including edges between grid nodes. As shown in FIG. 2, the unstructured grid generally refers to a grid whose structure is not a quadrilateral or a hexahedron including edges between grid nodes. For example, in the unstructured grid, edges between grid nodes form a structure like a triangle or a tetrahedron.

When stencil computation is performed on the structured grid, a storage sequence of node data of each grid node in the structured grid is the same as a traversal sequence of each grid node in the structured grid (that is, a computation sequence of each grid node). Therefore, scalar computation corresponding to each grid node in the structured grid may be generally converted into vector computation corresponding to a plurality of grid nodes. In this way, scalar computation of node data in the plurality of grid nodes can be implemented through sequential vector computation, and efficiency of performing stencil computation on the structured grid can be improved.

When stencil computation is performed on the unstructured grid, a storage sequence of node data of each grid node in the unstructured grid is different from a traversal sequence of each grid node in the structured grid. As shown in FIG. 2, node data of grid nodes in a disk is stored in a sequence of subscripts of the grid nodes, that is, a storage sequence of the node data is a grid node 1, a grid node 2, a grid node 3, ..., and a grid node n. When the grid nodes are traversed, traversal is generally performed in a sequence of edges or grids including grid nodes in the unstructured grid. For example, a sequence of the grid nodes in a table is a grid node 2, a grid node 8, a grid node 14, ..., and a grid node m. In this way, if stencil computation of an unstructured grid is to be converted into vector computation, a large quantity of discontinuous access needs to be performed to form a data vector for vector computation.

In a related technology, when stencil computation is performed on a structured grid, an unstructured grid, or another computing field, if a computation condition needs to be determined for each traversal of the grid node, and different computation operations need to be performed on traversed node data based on determining results, in this case, scalar computation corresponding to each grid node cannot be converted into vector computation, resulting in low efficiency of performing stencil computation.

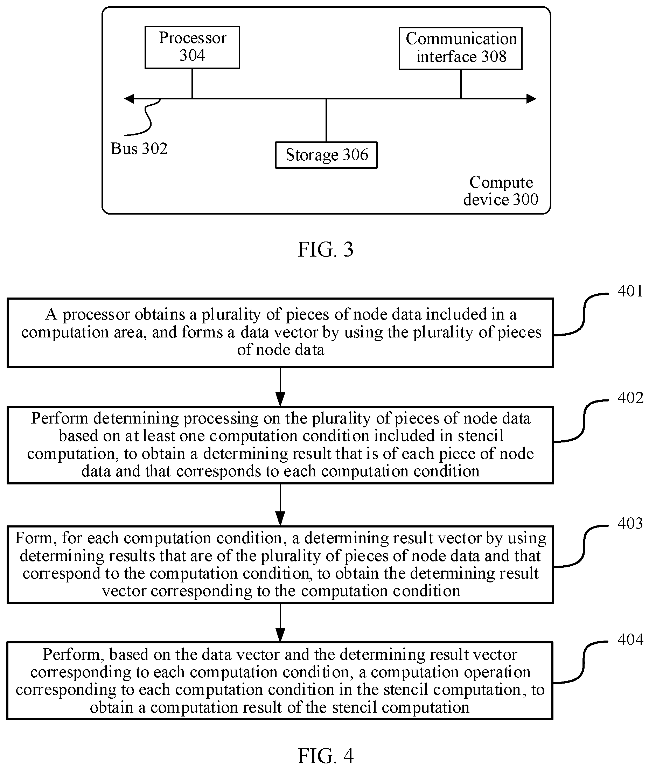

FIG. 3 is a diagram of a structure of a compute device according to an embodiment of this application. The compute device may be configured to perform a method for stencil computation provided in embodiments of this application, so that stencil computation of an unstructured grid can be converted into vector computation, and stencil computation with a computation condition can be converted into vector computation, improving efficiency of performing stencil computation. As shown in FIG. 3, the compute device 300 may include a bus 302, a processor 304, and a storage 306. Optionally, the compute device 300 may further include a communication interface 308. The processor 304, the storage 306, and the communication interface 308 communicate with each other through the bus 302. The compute device 300 may be a server or a terminal device. It should be understood that quantities of processors and storages in the compute device 300 are not limited in this application. The compute device 300 may be a device for running a model, or may be a terminal or a server. When the compute device 300 is the terminal, the compute device 300 includes but is not limited to a desktop computer, a mobile phone, a notebook computer, a tablet computer, or the like. When the compute device 300 is the server, the compute device 300 may be an independent server, may be a server cluster including a plurality of servers, may be a physical entity machine, or may be a virtual machine, a container, or the like that is virtualized by using a virtualization technology.

The bus 302 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 3, but this does not mean that there is only one bus or only one type of bus. The bus 302 may include a path for transmitting information between components (for example, the storage 306, the processor 304, and the communication interface 308) of the compute device 300.

The processor 304 may include any one or more of processors such as a central processing unit (central processing unit, CPU), a graphics processing unit (graphics processing unit, GPU), a microprocessor (microprocessor, MP), or a neural network processing unit (Neural network Processing Unit, NPU). The processor 304 may further include a vector operation unit. The vector operation unit is configured to perform vector computation after stencil computation is converted, to improve efficiency of the stencil computation.

The storage 306 may include a volatile memory (volatile memory), for example, a random access memory (random access memory, RAM). The storage 306 may further include a non-volatile memory (non-volatile memory), for example, a read-only memory (read-only memory, ROM), a flash memory, a hard disk drive (hard disk drive, HDD), or a solid-state drive (solid-state drive, SSD). The storage 106 stores executable program code, and the processor 104 executes the executable program code to implement the method for stencil computation provided in embodiments of this application.

The communication interface 308 uses a transceiver module, for example, but not limited to, a network interface card or a transceiver, to implement communication between the compute device 300 and another device or a communication network.

FIG. 4 shows a method for performing stencil computation according to an embodiment of this application. The method may be performed by the processor in the compute device shown in FIG. 3. Refer to FIG. 4. Steps of performing the method for stencil computation by the processor include:
Step 401: The processor obtains a plurality of pieces of node data included in a computation area, and forms a data vector by using the plurality of pieces of node data.

The computation area may be a structured grid, and the processor may read node data of each grid node stored in a storage into the memory. Then, the node data of each grid node stored in the memory may be read into a vector register according to a vector read instruction.

In an example, the data vector may be formed by using the node data in a traversal sequence of the node data in the computation area. When node data in an unstructured grid or a structured grid is traversed, the node data may be traversed in a sequence of edges connected between grid nodes, or the node data may be traversed in a sequence of polygons formed between the grid nodes. Correspondingly, for the traversed node data, scalar computation may be performed on each piece of node data, or scalar computation may be performed between a plurality of grid nodes connected to each edge or each polygon. For example, summation processing may be performed on node data corresponding to two grid nodes connected to each edge.

When scalar computation needs to be performed between a plurality of grid nodes connected to each required edge or polygon, a plurality of data vectors may be formed by using traversed nodes. Each data vector corresponds to a grid node at a location connected to each edge or polygon. For example, when summation processing needs to be performed on node data corresponding to two grid nodes connected to each edge, one data vector may be formed by using node data corresponding to a left grid node connected to each edge, and one data vector may be formed by using node data corresponding to a right grid node connected to each edge. In this way, a vector addition operation may be performed on the two data vectors, to implement an addition operation between grid nodes connected to each edge.

Step 402: Perform determining processing on the plurality of pieces of node data based on at least one computation condition included in the stencil computation, to obtain a determining result that is of each piece of node data and that corresponds to each computation condition.

The computation condition may be an if statement. The stencil computation may include one or more computation conditions. In a stencil computation process, for a compute node traversed each time, determining needs to be performed based on a computation condition included in the stencil computation, and then a corresponding computation operation is performed on the traversed compute node based on a determining result. When the stencil computation included a plurality of computation conditions, the node data may meet only one of the computation conditions. For example, the stencil computation includes two computation conditions: determining whether the node data is an odd number and determining whether the node data is an even number. When the node data is the odd number, 1 may be added to the node data; or when the node data is the even number, 2 may be added to the node data.

In an example, a determining object of the computation condition may be the node data. For example, the computation condition may be used to determine whether the node data is an odd number, whether the node data is an even number, or whether the node data is greater than a specified value. Alternatively, the computation condition may be determining whether a computation result is within a specified value range after specified computation is performed on the node data. It should be noted that setting of the computation condition is related to a specific service related to stencil computation. The example provided in this embodiment of this application is merely an example for ease of understanding of the solution.

During implementation, a determining result that is of each piece of node data and that corresponds to each computation condition may be sequentially determined in the traversal sequence of the node data. For each piece of node data, if the node data does not meet the computation condition, it is determined that the determining result corresponding to the node data is a first value; or if the node data meets the computation condition, it is determined that the determining result corresponding to the node data is a second value. In an example, the first value may be 0, and the second value may be 1; or the first value may be 1, and the second value may be 0.

Step 403: Form, for each computation condition, a determining result vector by using determining results that are of the plurality of pieces of node data and that correspond to the computation condition, to obtain the determining result vector corresponding to the computation condition.

During implementation, for any computation condition, determining may be performed on the plurality of pieces of node data in the traversal sequence of the node data, to obtain the determining result that is of each piece of node data and that corresponds to the computation condition. When determining results that are of the node data and that correspond to one computation condition are obtained, a determining result vector may be formed by using the determining results that are of the node data and that correspond to the computation condition in a sequence, so as to obtain the determining result vector corresponding to the computation condition. In an example, for the determining results obtained based on each computation condition, the determining result vector may be formed in the traversal sequence of the node data.

In addition, in correspondence to the example in step 401, when there are a plurality of data vectors formed by using the plurality of pieces of node data, in step 403, a determining result vector corresponding to each data vector may be separately formed by using determining results that are of the plurality of pieces of node data and that correspond to one computation condition. That is, each data vector has a same length as a corresponding determining result vector, and a value of each location in the determining result vector may indicate whether node data at a same location in the corresponding data vector meets the computation condition.

Step 404: Perform, based on the data vector and the determining result vector corresponding to each computation condition, a computation operation corresponding to each computation condition in the stencil computation, to obtain a computation result of the stencil computation.

During implementation, after the data vector and the determining result vector corresponding to each computation condition in the stencil computation are obtained, vector computation may be performed on the data vector and the determining result vector corresponding to each computation condition in a vector operation unit in a processor according to a vector computation instruction, so that a computation operation corresponding to a computation condition that each piece of node data meets is performed on the node data. After the stencil computation is completed, memory storage space applied for in step 401 may be released.

The processor for performing step 404 may be the same as or different from the processor for performing steps 401 to 403. For example, processors for performing steps 401 to 404 can both be CPUs, and the vector operation unit for performing an operation on the determining result vector and the data vector may be a vector operation unit included in the CPU. Alternatively, the processor for performing steps 401 to 403 may be a CPU, and the processor for performing step 404 may be an NPU, a GPU, or the like. That is, the vector operation unit for performing an operation on the determining result vector and the data vector may be a vector operation unit included in the NPU or the GPU. In this case, before step 404, the CPU may perform an operation on to-be-computed determining result vector and data vector on the NPU, the GPU, or the like.

In an example, for each computation condition and according to the vector computation instruction, vector computation of the determining result vector and an input vector that correspond to each computation condition is sequentially performed, to obtain a computation result vector corresponding to each computation condition, where an input vector corresponding to a 1^{st} computation condition is the data vector, and an input vector corresponding to a computation condition after the 1^{st} computation condition is a computation result vector corresponding to a previous computation condition; and in the computation result vector corresponding to each computation condition, an updated element exists relative to a corresponding input vector, and is a computation result of performing a corresponding computation operation on node data that meets the computation condition in the input vector, and a computation result vector corresponding to a last computation condition is the computation result of the stencil computation.

During implementation, the computation operation corresponding to each computation condition may be sequentially performed based on the data vector and the determining result vector corresponding to each computation condition. An execution sequence of computation operations corresponding to the plurality of computation conditions is not limited.

In a process of sequentially performing the computation operation corresponding to each computation condition, a computation operation corresponding to the 1^{st} computation condition may be implemented through vector computation of a determining result vector and a data vector of the 1^{st} computation condition. By performing vector computation of the determining result vector and the data vector of the 1^{st} computation condition, a corresponding computation operation may be performed on node data that meets the 1^{st} computation condition in the data vector.

A specific execution process of vector computation corresponding to each computation condition is not described herein.

For the node data that meets the 1^{st} computation condition in the data vector, after the vector operation is performed, a location of a corresponding computation result in the computation result vector is the same as a location of the node data in the data vector, and the computation result is a computation result of performing a corresponding computation operation on the node data. For node data that does not meet the 1^{st} computation condition in the data vector, after the vector operation is performed, a location of a corresponding computation result in the computation result vector is the same as a location of the node data in the data vector, and a value corresponding to the computation result is still a value of the node data.

In this way, after the vector computation corresponding to the 1^{st} computation condition is performed, an execution result of performing the corresponding computation operation on the node data that meets the 1^{st} computation condition may be obtained. Then, vector computation may be performed on the computation result vector corresponding to the 1^{st} computation condition and a determining result vector corresponding to a 2^{nd} computation condition. In this way, an obtained computation result vector corresponding to the 2^{nd} computation condition may include a computation result obtained through a corresponding computation operation performed on node data that meets the 2^{nd} computation condition. That is, the computation result vector corresponding to the 2^{nd} computation condition has an updated element relative to the computation result vector of the 1^{st} computation condition, that is, is a computation result obtained through a corresponding computation operation performed on the node data that meets the 2^{nd} computation condition in the computation result vector of the 1^{st} computation condition. That is, the computation result vector corresponding to the 2^{nd} computation condition includes the computation result obtained through the computation operation performed on the node data that meets the 1^{st} computation condition, the computation result obtained through the computation operation performed on the node data that meets the 2^{nd} computation condition, and node data that does not meet the 1^{st} computation condition and the 2^{nd} computation condition.

By analogy, for each computation condition after the 1^{st} computation condition, a computation operation corresponding to node data that meets a current computation condition may be implemented by performing vector computation of the computation result vector corresponding to the previous computation condition and a determining result vector corresponding to the current computation condition. In this way, the obtained computation result vector corresponding to the last computation condition includes result data of a corresponding computation operation performed on each piece of node data.

In addition, in correspondence to the example in step 401, when there are a plurality of data vectors formed by using the plurality of pieces of node data, after a vector operation is performed on each data vector and a plurality of determining result vectors, a corresponding vector operation may be performed on a plurality of obtained computation result vectors, to implement the scalar computation performed between the plurality of grid nodes connected to each edge or each polygon in step 401.

In an example, the stencil computation includes three computation conditions, and a corresponding data vector may be [0, 1, 2, 3, 4, 5, 6, 7, 8, 9]. The first three elements in the data vector meet a 1^{st} computation condition, the middle four elements in the data vector meet a 2^{nd} computation condition, and the last three elements in the data vector meet a 3^{rd} computation condition. In this case, a determining result vector corresponding to the 1^{st} computation condition may be [1, 1, 1, 0, 0, 0, 0, 0, 0, 0], a determining result vector corresponding to the 2^{nd} computation condition may be [0, 0, 0, 1, 1, 1, 1, 0, 0, 0], and a determining result vector corresponding to the 3^{rd} computation condition may be [0, 0, 0, 0, 0, 0, 0, 1, 1, 1].

After vector computation is performed on the determining result vector corresponding to the 1^{st} computation condition and the data vector, a 1^{st} computation result vector [a1, a2, a3, 3, 4, 5, 6, 7, 8, 9] may be obtained, where "a1", "a2", and "a3" are respectively computation results obtained by performing a computation operation corresponding to the 1^{st} computation condition on the first three elements in the data vector.

After vector computation is performed on the determining result vector corresponding to the 2^{nd} computation condition and the 1^{st} computation result vector, a 2^{nd} computation result vector [a1, a2, a3, b1, b2, b3, b4, 7, 8, 9] may be obtained, where "b1", "b2", "b3", and "b4" are respectively computation results obtained by performing a computation operation corresponding to the 2^{nd} computation condition on the middle four elements in the data vector.

After vector computation is performed on the determining result vector corresponding to the 3^{rd} computation condition and the 2^{nd} computation result vector, a 3^{rd} computation result vector [a1, a2, a3, b1 , b2, b3, b4, c1, c2, c3] may be obtained, where "c1", "c2", "c3", and "c4" are respectively computation results obtained by performing a computation operation corresponding to the 3^{rd} computation condition on the last three elements in the data vector. In this way, the obtained 3^{rd} computation result vector is the computation result of performing stencil computation.

The following describes vector computation corresponding to each computation condition by using an example.
1. Addition operation to multiplication-accumulation operation
   If a computation operation corresponding to a computation condition is adding node data and a specified value, corresponding vector computation may be multiplication and accumulation of a specified value vector formed by using an input vector, a determining result vector, and the specified value. For example, a determining result vector A may be [1, 1, 1, 0, 0, 0, 0, 0, 0, 0], a specified value vector B is [1, 1, 1, 1, 1, 1, 1, 1, 1, 1], and an input vector C is [0, 1, 2, 3, 4, 5, 6, 7, 8, 9]. The first three elements in the input vector meet the computation condition, that is, 1 needs to be added to the first three elements in the input vector. The corresponding vector computation may be: multiplying the determining result vector A by the specified value vector B in an element-wise manner, and then adding the input vector C. That is, a computation result vector S[i]=A[i]*B[i]+C[i]. The computation result vector S=[1, 2, 3, 3, 4, 5, 6, 7, 8, 9].
2. Assignment to mutual exclusion weighting
   If a computation operation corresponding to a computation condition is assigning a value to node data, corresponding vector computation may be mutual exclusion weighting of an assignment vector formed by using an input vector, a determining result vector, and assignment data. For example, a determining result vector A may be [0, 0, 0, 1, 1, 1, 1, 0, 0, 0], an assignment vector B is [1, 1, 1, 1, 1, 1, 1, 1, 1, 1], and an input vector C is [1, 2, 3, 3, 4, 5, 6, 7, 8, 9]. The middle four elements in the input vector meet the computation condition, that is, the middle four elements in the input vector are assigned a value of 1. The corresponding vector computation may be mutual exclusion weighting of elements corresponding to the assignment vector B and the input vector C. That is, S[i]=(1-A[i])*C[i]+A[i]*B[i]. A computation result vector S=[1, 2, 3, 1, 1, 1, 1, 7, 8, 9].
3. Multiplication to multi-step multiplication
   If a computation operation corresponding to a computation condition is multiplying node data by a specified value, corresponding vector computation may be multi-step multiplication of a specified value vector formed by using an input vector, a determining result vector, and the specified value. For example, a determining result vector A may be [0, 0, 0, 0, 0, 0, 0, 1, 1, 1], an assignment vector B is [2, 2, 2, 2, 2, 2, 2, 2, 2, 2], and an input vector C is [1, 2, 3, 1, 1, 1, 1, 7, 8, 9]. The last three elements in the input vector meet the computation condition, that is, the last three elements in the input vector need to be multiplied by 2. The corresponding vector computation may be first multiplying the determining result vector A, the assignment vector B, and the input vector C, and then performing mutual exclusion weighting with the input vector C. That is, S[i]=C[i]*A[i]*B[i]+(1-A[i])*C[i]. A computation result vector S=[1, 2, 3, 1, 1, 1, 1, 14, 16, 18].

It can be learned that vector computation of vectors such as the input vector and the determining result vector may replace original determining processing performed on the node data sequentially and scalar computation performed on the node data based on determining results. In this way, efficiency of the stencil computation can be improved.

The foregoing is an example of converting the original scalar computation in the stencil computation into the vector computation. Depending on different services related to the stencil computation, the stencil computation may further include other types of scalar computation. However, for any type of scalar computation, after the scalar computation is converted into vector computation, a value that is in a computation result vector and that corresponds to node data that does not meet a computation condition in a data vector can remain unchanged by using a determining result vector, and a value that is in the computation result vector and that corresponds to node data that meets the computation condition in the data vector is a computation result of performing the original scalar computation on the node data.

In this embodiment of this application, determining processing is performed on each piece of node data by using each computation condition in advance, to obtain the determining result vector corresponding to each computation condition, and then vector computation is performed on the determining result vector corresponding to each computation condition and the data vector formed by using the plurality of pieces of node data, so that the computation operation corresponding to the computation condition that each piece of node data meets is performed on the node data. It can be learned that, according to the method for performing stencil computation provided in this embodiment of this application, stencil computation including the computation condition can be converted into vector computation, improving efficiency of performing stencil computation.

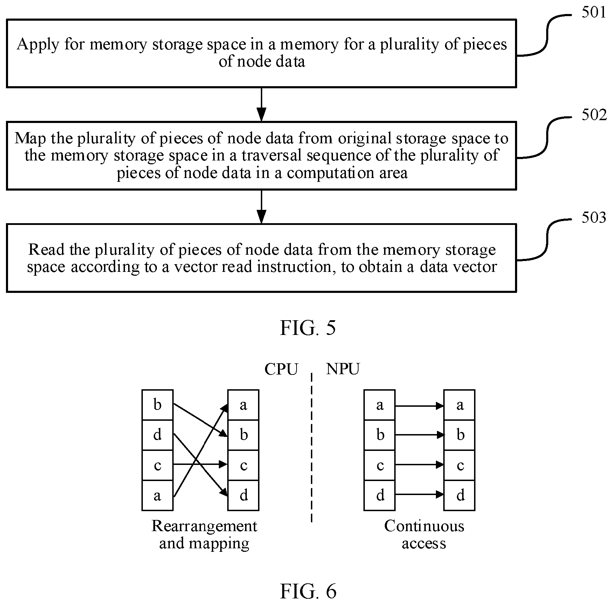

FIG. 5 is a flowchart of a method for converting stencil computation of an unstructured grid into vector computation according to an embodiment of this application. Correspondingly, the computation area in step 401 may alternatively be the unstructured grid, and processing of the method includes:
Step 501: Apply for memory storage space in a memory for a plurality of pieces of node data.

A size of the memory storage space applied for in the memory for the plurality of pieces of node data may be consistent with a size of storage space occupied by the plurality of pieces of node data in a storage (for example, a hard disk drive).

Step 502: Map the plurality of pieces of node data from original storage space to the memory storage space (memory map) in a traversal sequence of the plurality of pieces of node data in the computation area.

After the memory storage space is applied for in the memory, in the traversal sequence of the plurality of pieces of node data, a storage address of each piece of node data in the original storage space may be sequentially obtained, and a storage address of each piece of node data in the memory storage space may be sequentially determined. The plurality of pieces of node data are continuously stored in the memory storage space in the traversal sequence.

After the storage address of each piece of node data in the original storage space and the storage address of each piece of node data in the memory storage space are obtained, a mapping relationship between the node data in the original storage space and in the memory storage space may be established, so that a plurality of pieces of node data stored in the original storage space are mapped to the memory storage space in the traversal sequence. Mapping processing belongs to the conventional technology, and a mapping process is not described in detail in this embodiment of this application.

Step 503: Read the plurality of pieces of node data from the memory storage space according to a vector read instruction, to obtain a data vector.

After the plurality of pieces of node data are mapped to the memory storage space, a processor may continuously read the plurality of pieces of node data from the memory storage space according to the vector read instruction, and store the plurality of pieces of node data in a vector register, to obtain vector data formed by using the plurality of pieces of node data.

As shown in FIG. 6, a storage sequence of node data corresponding to a grid in a hard disk drive is b, d, c, and a, and a corresponding traversal sequence is a, b, c, and d. A CPU may rearrange and map b, d, c, and a to the memory in the traversal sequence. In this way, an NPU may load a, b, c, and d to a vector register of the NPU based on a vector load instruction and storage addresses of a, b, c, and d in the memory, so as to implement a vector operation on a data vector formed by using a, b, c, and d.

In an example, the processor may further record a mapping sequence of the node data. After the vector computation corresponding to the stencil computation is performed on the obtained data vector, each piece of result data in a computation result vector may be reversely mapped to the memory in the mapping sequence, so that the result data may be stored in the memory in a storage sequence of the node data in the original storage space.

During implementation, the method provided in this embodiment of this application may be set as a function and added to a corresponding mathematical library or an application related to stencil computation. The function may provide a mapping interface, a reverse mapping interface, a transfer interface, a condition determining interface, and the like. The application related to stencil computation may invoke an interface provided by the function to implement functions such as node data mapping, reverse mapping, and transfer in the foregoing embodiments.

According to the method for converting stencil computation of an unstructured grid into vector computation provided in this embodiment of this application, the plurality of pieces of node data on which stencil computation is to be performed can be mapped to the memory in the traversal sequence. In this way, discontinuous access to the plurality of pieces of node data can be avoided, and stencil computation of an unstructured grid can be implemented through vector computation, improving efficiency of the stencil computation.

For the stencil computation, a plurality of times of traversal computation may need to be performed on the node data in the grid. In this way, in this embodiment of this application, after the node data is rearranged and mapped to the memory, continuous access to the node data may be performed by using a mapping address of the node data in the memory in each traversal. In this way, discontinuous access to the node data in each traversal can be avoided, and the efficiency of the stencil computation can be further improved.

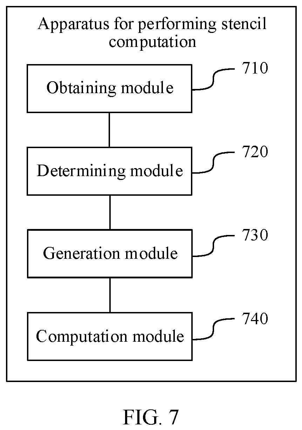

Based on a same inventive concept, an embodiment of this application further provides an apparatus for performing stencil computation. The stencil computation includes at least one computation condition and a corresponding computation operation. The apparatus may be the foregoing compute device for performing the method for stencil computation. FIG. 7 is a diagram of a structure of an apparatus for performing stencil computation according to an embodiment of this application. As shown in FIG. 7, the apparatus includes:
an obtaining module 710, configured to: obtain a plurality of pieces of node data included in a computation area, and form a data vector by using the plurality of pieces of node data, where the obtaining module 710 may be specifically configured to implement an obtaining function in step 401 and an implicit step thereof;
a determining module 720, configured to perform determining processing on the plurality of pieces of node data based on at least one computation condition included in the stencil computation, to obtain a determining result that is of each piece of node data and that corresponds to each computation condition, where the determining module 720 may be specifically configured to implement a determining function in step 402 and an implicit step thereof;
a generation module 730, configured to: form, for each computation condition, a determining result vector by using determining results that are of the plurality of pieces of node data and that correspond to the computation condition, to obtain the determining result vector corresponding to the computation condition, where the generation module 730 may be specifically configured to implement a generation function in step 403 and an implicit step thereof; and
a computation module 740, configured to perform, based on the data vector and the determining result vector corresponding to each computation condition, a computation operation corresponding to each computation condition in the stencil computation, to obtain a computation result of the stencil computation, where the computation module 740 may be specifically configured to implement a computation function in step 404 and an implicit step thereof.

In an implementation, the computation area is a structured grid or an unstructured grid.

In an implementation, the computation area is the unstructured grid, and the obtaining module 710 is configured to:
apply for memory storage space in a memory for the plurality of pieces of node data;
map the plurality of pieces of node data from original storage space to the memory storage space in a traversal sequence of the plurality of pieces of node data in the computation area; and
read the plurality of pieces of node data from the memory storage space according to a vector read instruction, to obtain the data vector.

In an implementation, the generation module 730 is configured to:
form, for each computation condition, the determining result vector by using the determining results that are of the plurality of pieces of node data and that correspond to the computation condition in the traversal sequence of the plurality of pieces of node data in the computation area, to obtain the determining result vector corresponding to the computation condition.

In an implementation, the determining module 720 is configured to:
perform determining processing on the plurality of pieces of node data based on the at least one computation condition included in the stencil computation; and
for each piece of node data, if the node data does not meet the computation condition, determine that the determining result corresponding to the node data is a first value; or if the node data meets the computation condition, determine that the determining result corresponding to the node data is a second value.

In an implementation, the computation module 740 is configured to:
sequentially perform, for each computation condition and according to a vector computation instruction, vector computation of the determining result vector and an input vector that correspond to each computation condition, to obtain a computation result vector corresponding to each computation condition, where an input vector corresponding to a 1^{st} computation condition is the data vector, and an input vector corresponding to a computation condition after the 1^{st} computation condition is a computation result vector corresponding to a previous computation condition; and in the computation result vector corresponding to each computation condition, an updated element exists relative to a corresponding input vector, and is a computation result of performing a corresponding computation operation on node data that meets the computation condition in the input vector, and a computation result vector corresponding to a last computation condition is the computation result of the stencil computation.

In an implementation, the first value is 0, and the second value is 1.

It should be noted that, when the apparatus for performing stencil computation provided in the foregoing embodiment performs stencil computation, division of the foregoing functional modules is merely used as an example for description. During actual application, the foregoing functions may be allocated to different functional modules for implementation based on a requirement. In other words, an internal structure of a compute device or program for performing stencil computation is divided into different functional modules, to complete all or some of the functions described above. In addition, the apparatus for performing stencil computation provided in the foregoing embodiment and embodiments of the method for performing stencil computation belong to a same concept. For a specific implementation process, refer to the method embodiments. Details are not described herein again.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the method for performing stencil computation provided in embodiments of this application.

An embodiment of this application further provides a computer-readable storage medium. The computer-readable storage medium may be any usable medium that can be stored by a compute device, or a data storage device, for example, a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. The instructions instruct the compute device to perform the method for performing stencil computation in embodiments of this application.

In this application, terms such as "first" and "second" are used to distinguish between same items or similar items that have basically same effects and functions. It should be understood that there is no logical or time sequence dependency between "first" and "second", and a quantity and an execution sequence are not limited. It should be further understood that although terms such as "first" and "second" are used in the following descriptions to describe various elements, these elements should not be limited by the terms. These terms are merely used to distinguish one element from another element. For example, without departing from the scope of various examples, a first value may be referred to as a second value, and similarly, a second value may be referred to as a first value. Both the first value and the second value may be collectively referred to as values, and in some cases, may be separate and different values.

In this application, the term "at least one" means one or more, and the term "a plurality of" means two or more.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A method for performing stencil computation, wherein the stencil computation comprises at least one computation condition and a corresponding computation operation, and the method comprises:
obtaining a plurality of pieces of node data comprised in a computation area, and forming a data vector by using the plurality of pieces of node data;
performing determining processing on the plurality of pieces of node data based on the at least one computation condition comprised in the stencil computation, to obtain a determining result that is of each piece of node data and that corresponds to each computation condition;
forming, for each computation condition, a determining result vector by using determining results that are of the plurality of pieces of node data and that correspond to the computation condition, to obtain the determining result vector corresponding to the computation condition; and
performing, based on the data vector and the determining result vector corresponding to each computation condition, a computation operation corresponding to each computation condition in the stencil computation, to obtain a computation result of the stencil computation.

2. The method according to claim 1, wherein the computation area is a structured grid or an unstructured grid.

3. The method according to claim 2, wherein the computation area is the unstructured grid, and the forming the data vector by using the plurality of pieces of node data comprises:
applying for memory storage space in a memory for the plurality of pieces of node data;
mapping the plurality of pieces of node data from original storage space to the memory storage space in a traversal sequence of the plurality of pieces of node data in the computation area; and
reading the plurality of pieces of node data from the memory storage space according to a vector read instruction, to obtain the data vector.

4. The method according to any one of claims 1 to 3, wherein the forming, for each computation condition, the determining result vector by using the determining results that are of the plurality of pieces of node data and that correspond to the computation condition, to obtain the determining result vector corresponding to the computation condition comprises:
forming, for each computation condition, the determining result vector by using the determining results that are of the plurality of pieces of node data and that correspond to the computation condition in the traversal sequence of the plurality of pieces of node data in the computation area, to obtain the determining result vector corresponding to the computation condition.

5. The method according to any one of claims 1 to 4, wherein the performing determining processing on the plurality of pieces of node data based on the at least one computation condition comprised in the stencil computation, to obtain the determining result that is of each piece of node data and that corresponds to each computation condition comprises:
performing determining processing on the plurality of pieces of node data based on the at least one computation condition comprised in the stencil computation; and
for each piece of node data, if the node data does not meet the computation condition, determining that the determining result corresponding to the node data is a first value; or if the node data meets the computation condition, determining that the determining result corresponding to the node data is a second value.

6. The method according to any one of claims 1 to 5, wherein the performing, based on the data vector and the determining result vector corresponding to each computation condition, the computation operation corresponding to each computation condition in the stencil computation, to obtain the computation result of the stencil computation comprises:
sequentially performing, for each computation condition and according to a vector computation instruction, vector computation of the determining result vector and an input vector that correspond to each computation condition, to obtain a computation result vector corresponding to each computation condition, wherein
an input vector corresponding to a 1^{st} computation condition is the data vector, and an input vector corresponding to a computation condition after the 1^{st} computation condition is a computation result vector corresponding to a previous computation condition; and in the computation result vector corresponding to each computation condition, an updated element exists relative to a corresponding input vector, and is a computation result of performing a corresponding computation operation on node data that meets the computation condition in the input vector, and a computation result vector corresponding to the last computation condition is the computation result of the stencil computation.

7. The method according to claim 5, wherein the first value is 0, and the second value is 1.

8. An apparatus for performing stencil computation, wherein the stencil computation comprises at least one computation condition and a corresponding computation operation, and the apparatus comprises:
an obtaining module, configured to: obtain a plurality of pieces of node data comprised in a computation area, and form a data vector by using the plurality of pieces of node data;
a determining module, configured to perform determining processing on the plurality of pieces of node data based on the at least one computation condition comprised in the stencil computation, to obtain a determining result that is of each piece of node data and that corresponds to each computation condition;
a generation module, configured to: form, for each computation condition, a determining result vector by using determining results that are of the plurality of pieces of node data and that correspond to the computation condition, to obtain the determining result vector corresponding to the computation condition; and
a computation module, configured to perform, based on the data vector and the determining result vector corresponding to each computation condition, a computation operation corresponding to each computation condition in the stencil computation, to obtain a computation result of the stencil computation.

9. The apparatus according to claim 8, wherein the computation area is a structured grid or an unstructured grid.

10. The apparatus according to claim 9, wherein the computation area is the unstructured grid, and the obtaining module is configured to:
apply for memory storage space in a memory for the plurality of pieces of node data;
map the plurality of pieces of node data from original storage space to the memory storage space in a traversal sequence of the plurality of pieces of node data in the computation area; and
read the plurality of pieces of node data from the memory storage space according to a vector read instruction, to obtain the data vector.

11. The apparatus according to any one of claims 8 to 10, wherein the generation module is configured to:
form, for each computation condition, the determining result vector by using the determining results that are of the plurality of pieces of node data and that correspond to the computation condition in the traversal sequence of the plurality of pieces of node data in the computation area, to obtain the determining result vector corresponding to the computation condition.

12. The apparatus according to any one of claims 8 to 11, wherein the determining module is configured to:
perform determining processing on the plurality of pieces of node data based on the at least one computation condition comprised in the stencil computation; and
for each piece of node data, if the node data does not meet the computation condition, determine that the determining result corresponding to the node data is a first value; or if the node data meets the computation condition, determine that the determining result corresponding to the node data is a second value.

13. The apparatus according to any one of claims 8 to 12, wherein the computation module is configured to:
sequentially perform, for each computation condition and according to a vector computation instruction, vector computation of the determining result vector and an input vector that correspond to each computation condition, to obtain a computation result vector corresponding to each computation condition, wherein
an input vector corresponding to a 1^{st} computation condition is the data vector, and an input vector corresponding to a computation condition after the 1^{st} computation condition is a computation result vector corresponding to a previous computation condition; and in the computation result vector corresponding to each computation condition, an updated element exists relative to a corresponding input vector, and is a computation result of performing a corresponding computation operation on node data that meets the computation condition in the input vector, and a computation result vector corresponding to the last computation condition is the computation result of the stencil computation.

14. The apparatus according to claim 12, wherein the first value is 0, and the second value is 1.

15. A compute device, wherein the compute device comprises a storage and a processor, the storage stores at least one instruction, and the processor executes the at least one instruction to perform the method according to any one of claims 1 to 7.

16. A computer-readable storage medium, wherein the computer-readable storage medium stores computer program code, and when the computer program code is executed by a computer device, the computer device is enabled to perform the method according to any one of claims 1 to 7.

17. A computer program product comprising instructions, wherein when the computer program product runs on a computer device, the computer device is enabled to perform the method according to any one of claims 1 to 7.
